# EUROPEAN PATENT APPLICATION

(11) **EP 4 393 603 A1**
(43) Date of publication of application: **03.07.2024**
(21) Application number: 23178187.3
(22) Date of filing: 08.06.2023
(51) Int. Cl.: B05B 11/10

(54) **PUMPING CONTAINER SPRING AND PUMPING CONTAINER INCLUDING SAME**

(30) Priority: 29.12.2022 KR 20220189091
(71) Applicant: Taesung Industrial Co., Ltd., Anyang-si, Gyeonggi-do 14055 (KR)
(72) Inventor: LEE, Jong Hee, 16014 Uiwang-si, Gyeonggi-do (KR); CHO, Min Jun, 10242 Goyang-si, Gyeonggi-do (KR)
(74) Representative: Viering, Jentschura & Partner mbB Patent- und Rechtsanwälte

(57) **Abstract**

The present invention relates to a pumping container spring and a pumping container including the same. The pumping container spring(80) includes a rotation force absorption ring(85) installed between an upper support plate(81) and a lower support plate(82), and a spiral part including a forward spiral part (83) installed between the upper support plate(81) and the rotation force absorption ring(85), and a reverse spiral part(84) installed between the rotation force absorption ring(85) and the lower support plate(82). According to the present invention, a pressing operation of the button installed in the pumping container becomes convenient.

## Description

### Technical field

The present invention relates to a pumping container spring used when liquid contents stored in a container part are discharged to the outside in a pumping manner through a pressing operation of a button, and a pumping container including the pumping container spring.

### Background art

A pumping container having a structure in which liquid contents such as cosmetics are discharged to the outside in a pumping manner through a pressing operation of a button is being used, and a pumping container spring, which accumulates an elastic force capable of raising a pressed button to the original position thereof, is installed in the pumping container.

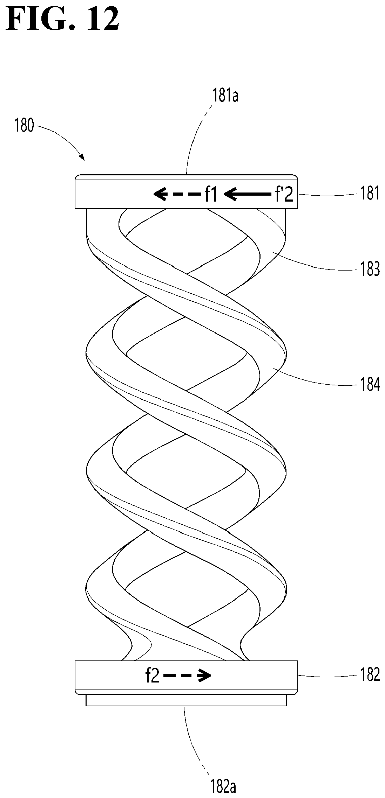

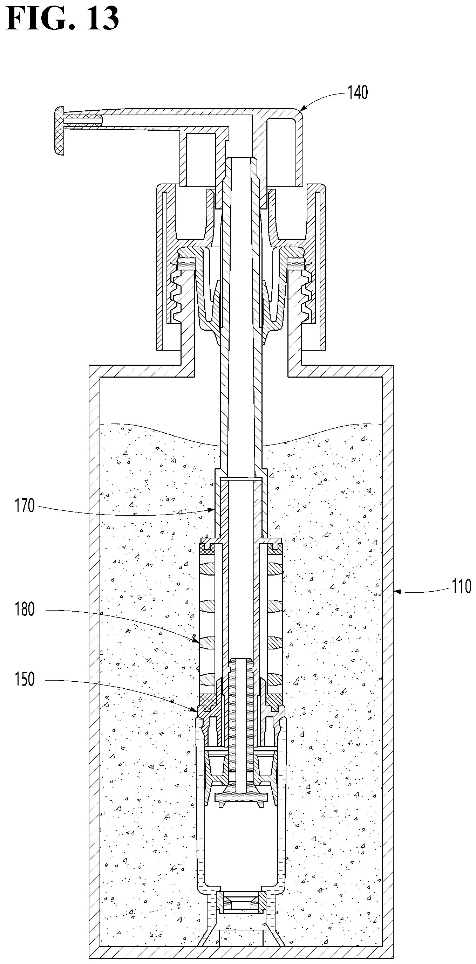

FIG. 12 is a view showing a conventional pumping container spring, and FIG. 13 is a view showing a pumping container in which a conventional pumping container spring is installed.

A conventional pumping container spring 180 includes an upper support plate 181 having a circular upper passing-hole 181a formed therethrough, a lower support plate 182 disposed below the upper support plate 181, and a spiral part which includes a first forward spiral part 183 and a second forward spiral part 184 and is installed between the upper support plate 181 and the lower support plate 182.

The circular lower passing-hole 182a is formed through the center of the lower support plate 182.

Each of the first forward spiral part 183 and the second forward spiral part 184 is formed in a left-hand circular spiral shape.

The upper end of each of the first forward spiral part 183 and the second forward spiral part 184 is fixed to the lower surface of the upper support plate 181, and the lower end of each of the first forward spiral part 183 and the second forward spiral part 184 is fixed to the upper surface of the lower support plate 182.

The conventional pumping container spring 180 is installed inside a container part 110 so that the upper support plate 181 is in contact with a pressing member 170 and the lower support plate 182 is in contact with a spring support member 150.

The operation of the conventional pumping container spring 180 is described as follows.

When a button 140 is pressed toward the container part 110, the upper support plate 181 approaches the lower support plate 182.

As the upper support plate 181 approaches the lower support plate 182, each of the first forward spiral part 183 and the second forward spiral part 184 accumulates an elastic force while being compressed.

While the first forward spiral part 183 and the second forward spiral part 184 are compressed, an upper support plate rotation force(see "f1" in FIG. 12) is applied to the upper support plate 181, and a lower support plate rotation force(see "f2" in FIG. 12) is applied to the lower support plate 182. The upper support plate rotation force means a force to rotate the upper support plate 181 in the circumferential direction thereof, and the lower support plate rotation force means a force to rotate the lower support plate 182 in the circumferential direction thereof.

The lower support plate rotation force(see "f2" in FIG. 12) applied to the lower support plate 182 in a state where the button 140 is pressed is converted into the upper support plate rotation force(see "f'2" in FIG. 12) and then applied to the upper support plate 181. The reason why the lower support plate rotation force(see "f2" in FIG. 12) is applied to the upper support plate 181 is that the lower support plate 182 is restricted to the spring support member 150.

The conventional pumping container spring 180 has a problem in that when the button 140 is pressed, the rotation amount of the button 140 increases due to the upper support plate rotation force(see "f1" and "f'2" in FIG. 12) applied to the upper support plate 181 from the spiral part 183 and 184. The reason why the rotation amount of the button 140 increases is that the upper support plate rotation force(see "f1" and "f'2" in FIG. 12) is transmitted to the button 140 through the pressing member 170.

As the rotation amount of the button 140 increases, a pressing operation of the button 140 becomes inconvenient. □Patent Document□
(Patent Document 1) Korea Patent Registration No. 10-2120009(registered on June 01, 2020)

### Summary of the Invention

Accordingly, the present invention provides a pumping container spring capable of pressing the button conveniently when the button is pressed, and a pumping container including the pumping container spring.

In an aspect of the present invention, a pumping container spring may include an upper support plate having a circular upper passing-hole formed therethrough, a lower support plate which has a circular lower passing-hole formed therethrough and is disposed under the upper support plate so that the lower passing-hole is aligned with the upper passing-hole and the lower support plate is parallel to the upper support plate, a spiral part formed in a circular spiral shape and installed between the upper support plate and the lower support plate, and a rotation force absorption ring installed between the upper support plate and the lower support plate. The rotation force absorption ring has a circular absorption ring passing-hole formed therethrough and is installed such that the absorption ring passing-hole is aligned with the upper passing-hole and the rotation force absorption ring is disposed parallel to the upper support plate. The spiral part includes a forward spiral part which is formed in one shape of a left-hand circular spiral shape and a right-hand circular spiral shape and installed between the upper support plate and the rotation force absorption ring so that the upper end of the forward spiral part is fixed to the lower surface of the upper support plate and the lower end of the forward spiral part is fixed to the upper surface of the rotation force absorption ring, and a reverse spiral part which is formed in a circular spiral shape in a direction opposite to the forward spiral part and installed between the rotation force absorption ring and the lower support plate so that the upper end of the reverse spiral part is fixed to the lower surface of the rotation force absorption ring and the lower end of the reverse spiral part is fixed to the upper surface of the lower support plate. As a result, the rotation amount of the button may be reduced when the button is pressed, thereby pressing the button conveniently.

In order to maintain stably the state, in which the upper support plate, the lower support plate, and the rotation force absorption ring are arranged side by side, by increasing the elastic force accumulated in the forward spiral part and the reverse spiral part when the button is pressed, it is preferable that the forward spiral part may include a first forward spiral part and a second forward spiral part which is formed in a circular spiral shape in the same direction as the first forward spiral part, and the reverse spiral part may include a first reverse spiral part which is formed in a circular spiral shape in a direction opposite to the first forward spiral part and a second reverse spiral part which is formed in a circular spiral shape in the same direction as the first reverse spiral part. The first forward spiral part has an upper end fixed to the lower surface of the upper support plate and a lower end fixed to the upper surface of the rotation force absorption ring. The second forward spiral part is fixed to the upper support plate so that, with reference to the centerline of the upper passing-hole as a symmetric reference line, a point at which the upper end of the second forward spiral part is fixed to the lower surface of the upper support plate and a point at which the upper end of the first forward spiral part is fixed to the lower surface of the upper support plate are linearly symmetric to each other. And the second forward spiral part is fixed to the rotation force absorption ring so that a point at which the lower end of the second forward spiral part is fixed to the upper surface of the rotation force absorption ring and a point at which the lower end of the first forward spiral part is fixed to the upper surface of the rotation force absorption ring are linearly symmetric to each other with reference to the symmetry reference line. The first reverse spiral part has an upper end fixed to the lower surface of the rotation force absorption ring and a lower end fixed to the upper surface of the lower support plate. The second reverse spiral part is fixed to the rotation force absorption ring so that a point at which the upper end of the second reverse spiral part is fixed to the lower surface of the rotation force absorption ring and a point at which the upper end of the first reverse spiral part is fixed to the lower surface of the rotation force absorption ring are linearly symmetric to each other with reference to the symmetry reference line. And the second reverse spiral part is fixed to the lower support plate so that a point at which the lower end of the second reverse spiral part is fixed to the upper surface of the lower support plate and a point at which the lower end of the first reverse spiral part is fixed to the upper surface of the lower support plate are linearly symmetric to each other with reference to the symmetry reference line.

In addition, in order to press the button conveniently by reducing the difference between the elastic forces accumulated in the forward spiral part and the reverse spiral part when the button is pressed, it is preferable that the second forward spiral part has the same spiral trajectory as the first forward spiral part, the first reverse spiral part has the same spiral trajectory as the first forward spiral part, and the second reverse spiral part has the same spiral trajectory as the first forward spiral part.

Also, in order to press the button conveniently by reducing the difference between the elastic forces accumulated in the forward spiral part and the reverse spiral part when the button is pressed, it is preferable that the first reverse spiral part is fixed to the rotation force absorption ring so that, with reference to the plane dividing the rotation force absorption ring into two parts having the same vertical thickness as a symmetry reference surface, a point at which the upper end of the first reverse spiral part is fixed to the lower surface of the rotation force absorption ring and a point at which the lower end of the first forward spiral part is fixed to the upper surface of the rotation force absorption ring are plane-symmetric to each other, and the second reverse spiral part is fixed to the rotation force absorption ring so that a point at which the upper end of the second reverse spiral part is fixed to the lower surface of the rotation force absorption ring and a point at which the lower end of the second forward spiral part is fixed to the upper surface of the rotation force absorption ring are plane-symmetric to each other with reference to the symmetry reference surface.

In another aspect of the present invention, a pumping container may include a container part in which liquid contents are stored and any one of the above-mentioned pumping container springs according to the embodiments of the present invention. The pumping container spring is installed between the button and the container part to accumulate an elastic force for raising the button to the original position thereof when the button is pressed toward the container part.

### Description of drawings

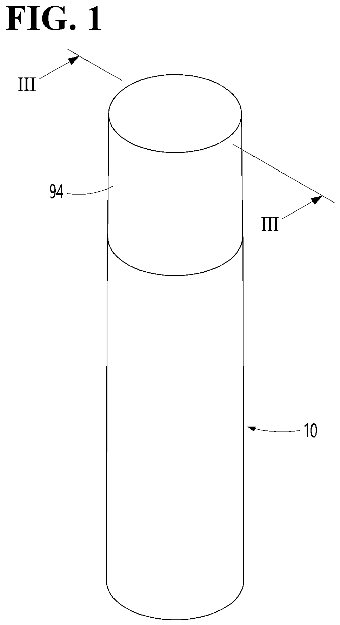

FIG. 1 is a combined perspective view of a pumping container according to an embodiment of the present invention;

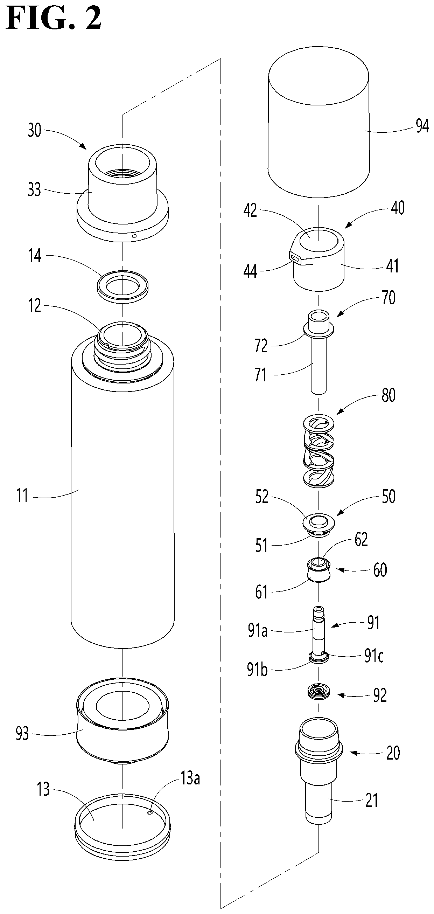

FIG. 2 is an exploded perspective view of a pumping container according to an embodiment of the present invention;

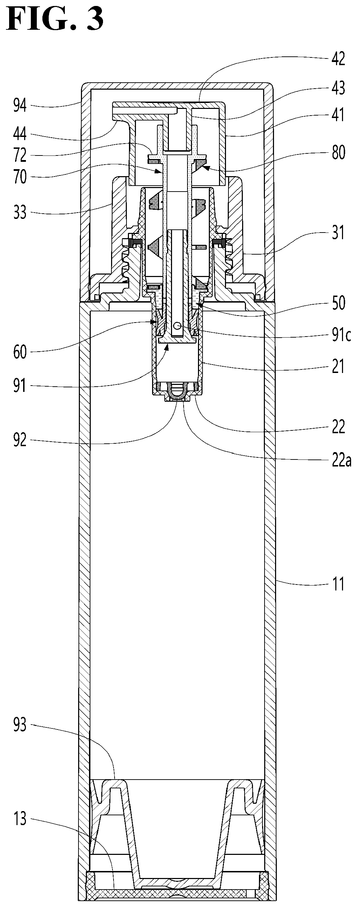

FIG. 3 is a cross-sectional view taken along line III-III in FIG. 1;

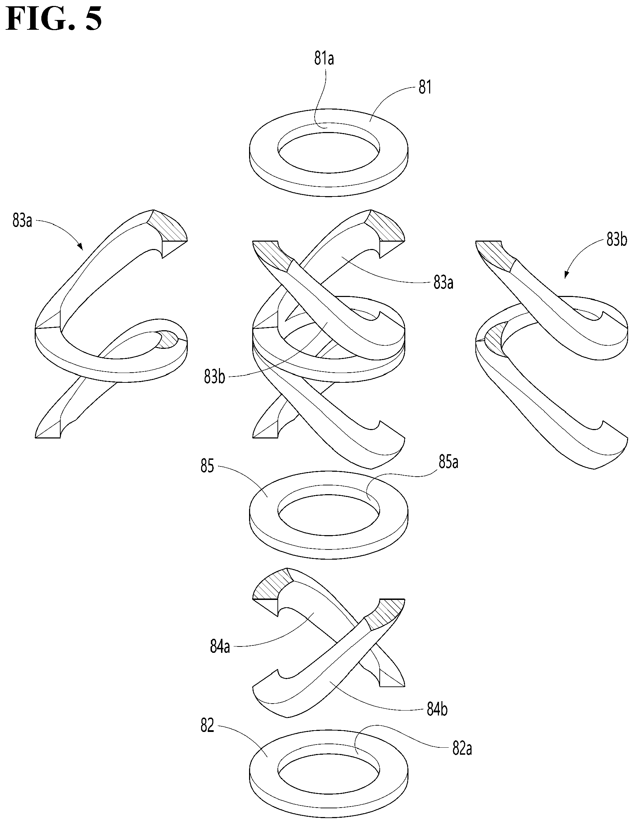

FIG. 4 and FIG. 5 are views showing a pumping container spring according to an embodiment of the present invention;

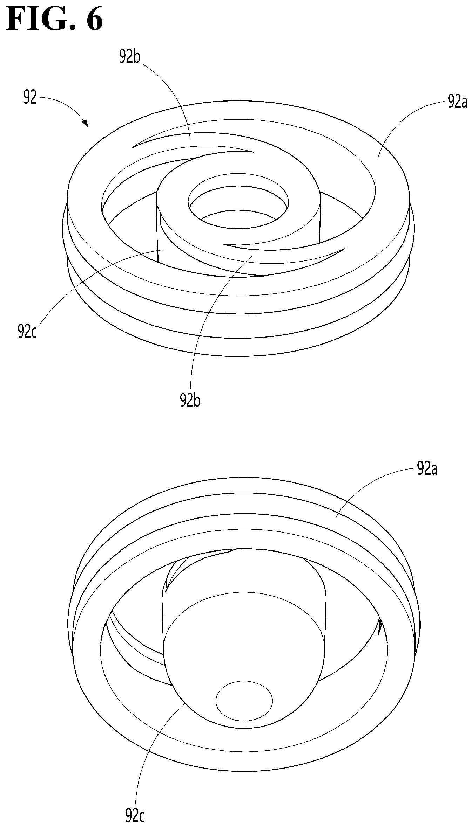

FIG. 6 is a perspective view of a cylinder valve according to an embodiment of the present invention;
FIG. 7 and FIG. 8 are views showing an operation state of a pumping container according to an embodiment of the present invention;
FIG. 9 and FIG. 10 are views showing a pumping container spring according to another embodiment of the present invention;
FIG. 11 is a view showing a pumping container spring according to another embodiment of the present invention;
FIG. 12 is a view showing a conventional pumping container spring; and
FIG. 13 is a view showing a pumping container in which a conventional pumping container spring is installed.

### Embodiments of the invention

Hereinafter, the present invention will be described in detail with reference to the accompanying drawings.

A pumping container according to an embodiment of the present invention includes a container part 10 provided with a container side part 11 having a linear tube shape, a container neck part 12 formed at the upper end of the container side part 11, and a container bottom part 13 coupled to the container side part 11 so as to close a lower end opening of the container side part 11, a cylinder 20 installed inside the container part 10, an inner cap 30 coupled to the container neck part 12, a button 40 installed above the container part 10, a spring support member 50 coupled to the cylinder 20, a cylinder piston 60 installed inside the cylinder 20, a pressing member 70 coupled to the button 40, a pumping container spring 80 installed between the button 40 and the container part 10, an intermediate channel member 91 coupled to the pressing member 70, a cylinder valve 92 installed inside the cylinder 20, a container piston 93 installed inside the container part 10, and a container cap 94 installed to surround the button 40 and the inner cap 30.

A ventilation hole 13a is formed through the container bottom part 13.

A sealing ring 14 is installed on the container neck part 12.

The cylinder 20 includes a cylinder side part 21 having a linear tube shape, and a cylinder bottom part 22 formed to close the lower end of the cylinder side part 21.

An inlet hole 22a is formed through the center of the cylinder bottom part 22.

The inner cap 30 includes an inner cap side part 31 having a linear tube shape, and a button guide tube part 33 formed to extend upward from the upper end of the inner cap side part 31.

The button 40 include a button side part 41 having a linear tube shape, a button ceiling part 42 formed to close the upper end of the button side part 41, a vertical button channel part 43 which has a linear tube shape and is formed on the lower surface of the button ceiling part 42 to be parallel to the button side part 41, a horizontal button channel part 44 which has a linear tube shape and is formed on the lower surface of the button ceiling part 42 to be connected to the upper end of the vertical button channel part 43 and be perpendicular to the button side part 41.

The button 40 is installed to be movable up or down in the height direction of the container side part 11 along the button guide tube part 33.

The spring support member 50 includes a support member fastening part 51 having a linear tube shape, and a support member support ledge 52 formed at the upper end of the support member fastening part 51.

The spring support member 50 is coupled to the cylinder 20 through the support member fastening part 51.

The cylinder piston 60 includes a piston close contact part 61 having a linear tube shape, and a piston channel opening/closing part 62 which has a linear tube shape and is disposed to be parallel to the piston close contact part 61, inside the piston close contact part 61.

The cylinder piston 60 is installed inside the cylinder 20 so that the piston close contact part 61 is in close contact with the inner surface of the cylinder side part 21.

The pressing member 70 includes a pressing part 71 having a linear tube shape, and a pressing member support ledge 72 protruding outward from the outer surface of the pressing part 71.

The pressing member 70 is coupled to the button 40 so that the upper end of the pressing part 71 is connected to the vertical button channel part 43, and the lower end of the pressing part 71 is spaced apart from the cylinder piston 60.

The pumping container spring 80 includes an upper support plate 81 having a circular upper passing-hole 81a, a lower support plate 82 disposed below the upper support plate 81, a circular rotation force absorption ring 85 installed between the upper support plate 81 and the lower support plate 82, and a spiral part installed between the upper support plate 81 and the lower support plate 82.

A circular lower passing-hole 82a is formed through the center of the lower support plate 82.

The lower support plate 82 is installed such that the lower passing-hole 82a is aligned with the upper passing-hole 81a.

A circular absorption ring passing-hole 85a is formed through the center of the rotation force absorption ring 85.

The rotation force absorption ring 85 is installed to be disposed parallel to the upper support plate 81, and the absorption ring passing-hole 85a is aligned with the upper passing-hole 81a.

The spiral part includes a forward spiral part 83 installed between the upper support plate 81 and the rotation force absorption ring 85, and a reverse spiral part 84 installed between the rotation force absorption ring 85 and the lower support plate 82.

The forward spiral part 83 includes a first forward spiral part 83a and a second forward spiral part 83b, of each of which the upper end is fixed to the lower surface of the upper support plate 81 and of each of which the lower end is fixed to the upper surface of the rotation force absorption ring 85.

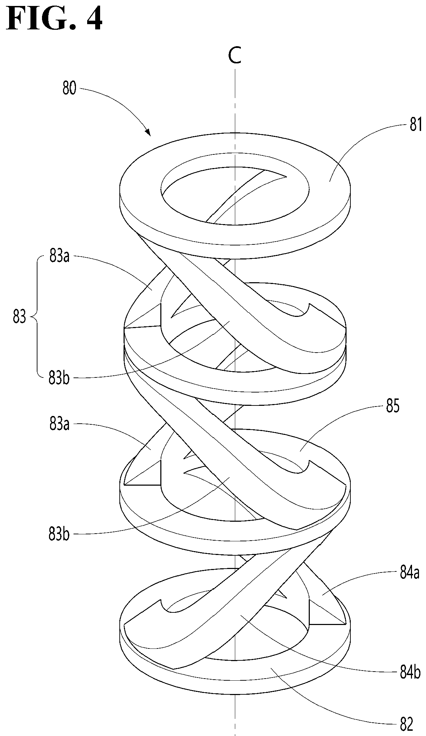

The second forward spiral part 83b is fixed to the upper support plate 81 so that a point at which the upper end of the second forward spiral part 83b is fixed to the lower surface of the upper support plate 81 and a point at which the upper end of the first forward spiral part 83a is fixed to the lower surface of the upper support plate 81 are linearly symmetric to each other with reference to a symmetry reference line (see "C" in FIG. 4). The symmetry reference line (see "C" in FIG. 4) means the centerline of the upper passing-hole 81a.

In addition, the second forward spiral part 83b is fixed to the rotation force absorption ring 85 so that a point at which the lower end of the second forward spiral part 83b is fixed to the upper surface of the rotation force absorption ring 85 and a point at which the lower end of the first forward spiral part 83a is fixed to the upper surface of the rotation force absorption ring 85 are linearly symmetric to each other with reference to the symmetry reference line.

Each of the first forward spiral part 83a and the second forward spiral part 83b is formed in a left-hand circular spiral shape.

The number of turns between the upper end and the lower end of each of the first forward spiral part 83a and the second forward spiral part 83b is 1.5.

The reverse spiral part 84 includes a first reverse spiral part 84a and a second reverse spiral part 84b, of each of which the upper end is fixed to the lower surface of the rotation force absorption ring 85 and of each of which the lower end is fixed to the upper surface of the lower support plate 82.

The second reverse spiral part 84b is fixed to the rotation force absorption ring 85 so that a point at which the upper end of the second reverse spiral part 84b is fixed to the lower surface of the rotation force absorption ring 85 and a point at which the upper end of the first reverse spiral part 84a is fixed to the lower surface of the rotation force absorption ring 85 are linearly symmetric to each other with reference to the symmetry reference line.

In addition, the second reverse spiral part 84b is fixed to the lower support plate 82 so that a point at which the lower end of the second reverse spiral part 84b is fixed to the upper surface of the lower support plate 82 and a point at which the lower end of the first reverse spiral part 84a is fixed to the upper surface of the lower support plate 82 are linearly symmetric to each other with reference to the symmetry reference line.

Each of the first reverse spiral part 84a and the second reverse spiral part 84b is formed in a right-hand circular spiral shape.

The number of turns between the upper end and the lower end of each of the first reverse spiral part 84a and the second reverse spiral part 84b is 0.5.

The pumping container spring 80 is installed such that the upper support plate 81 is in contact with the pressing member support ledge 72 and the lower support plate 82 is in contact with the support member support ledge 52.

The pumping container spring 80 may be made using polypropylene, thermoplastic copolyester elastomer, or the like.

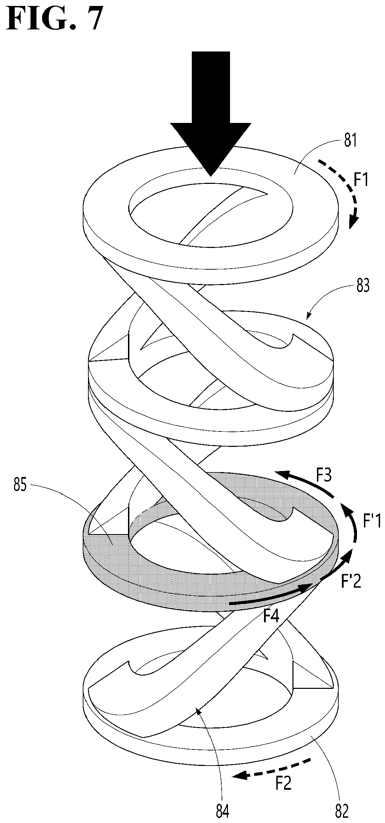

The operation of the pumping container spring 80 will be described with reference to FIG. 7 as follows.

When the button 40 is pressed and thus lowered toward the container part 10, the upper support plate 81 approaches the lower support plate 82.

As the upper support plate 81 approaches the lower support plate 82, each of the forward spiral part 83 and the second reverse spiral part 84 accumulates an elastic force while being compressed.

While the forward spiral part 83 is compressed, an upper support plate rotation force (see "F1" in FIG. 7) is applied to the upper support plate 81, and an absorption ring rotation force (see "F3" in FIG. 7) is applied to the rotation force absorption ring 85. The absorption ring rotation force means a force to rotate the rotation force absorption ring 85 in the circumferential direction thereof.

The upper support plate rotation force(see "F1" in FIG. 7) applied to the upper support plate 81 in a state where the button 40 is pressed is converted into the absorption ring rotation force(see "F'1" in FIG. 7) and then applied to the rotation force absorption ring 85. The reason why the upper support plate rotation force (see "F1" in FIG. 7) is applied to the rotation force absorption ring 85 is that there is no restriction on the rotational motion of the rotation force absorption ring 85.

In addition, while the reverse spiral part 84 is compressed, a lower support plate rotation force(see "F2" in FIG. 7) is applied to the lower support plate 82, and an absorption ring rotation force (see "F4" in FIG. 7) is applied to the rotation force absorption ring 85.

The lower support plate rotation force applied to the lower support plate 82 in a state where the button 40 is pressed is converted into the absorption ring rotation force (see "F'2" in FIG. 7) and then applied to the rotation force absorption ring 85. The reason why the lower support plate rotation force(see "F2" in FIG. 7) is applied to the rotation force absorption ring 85 is that there is no restriction on the rotational motion of the rotation force absorption ring 85.

The intermediate channel member 91 includes an intermediate discharge channel part 91a having a linear tube shape and a closed lower end, and an intermediate channel opening/closing part 91b extending from the lower end of the intermediate discharge channel part 91a.

An intermediate discharge channel hole 91c is formed through the intermediate discharge channel part 91a.

The intermediate channel member 91 is coupled to the pressing part 71 such that the intermediate channel opening/closing part 91b is in contact with the lower end of the piston channel opening/closing part 62.

The cylinder valve 92 include a tubular valve body part 92a, a valve support arm 92b formed on the inner circumferential surface of the valve body part 92a, and a closed protruding part 92c which has a U-shaped cross-section shape and is connected to the valve support arm 92b.

The cylinder valve 92 is installed inside the cylinder 20 such that the closed protruding part 92c closes the inlet hole 22a.

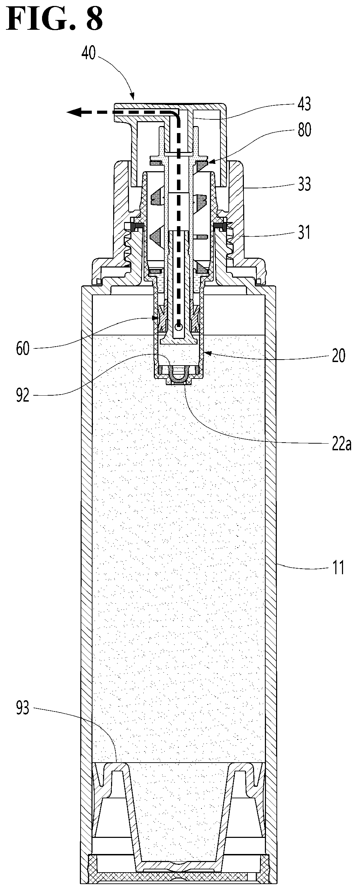

A method of using a pumping container having the above-described configuration according to an embodiment of the present invention will be described with reference to FIG. 8 as follows.

When the button 40 is pressed and thus lowered toward the container part 10, via the following processes, the liquid contents stored inside the cylinder 20 are discharged to the outside through the intermediate channel member 91, the pressing member 70, the vertical button channel part 43, and the horizontal button channel part 44.
1) As the cylinder piston 60 lowers later than the intermediate channel member 91, the portion between the intermediate channel opening/closing part 91b and the piston channel opening/closing part 62 is opened.
2) As the cylinder piston 60 lowers, the inside of the cylinder 20 becomes a positive pressure state, the inlet hole 22a is closed by the cylinder valve 92. The positive pressure state means a pressure state higher than atmospheric pressure.
3) When the inlet hole 22a is closed in a state where the inside of the cylinder 20 is in a positive pressure, the liquid contents stored inside the cylinder 20 are discharged to the outside.

On the other hand, when the operation of pressing the button 40 is stopped, via the following processes, the liquid contents stored in the container part 10 are introduced into the cylinder 20 through the inlet hole 22a.
1) As the cylinder piston 60 raises later than the intermediate channel member 91, the portion between the intermediate channel opening/closing part 91b and the piston channel opening/closing part 62 is closed.
2) As the cylinder piston 60 raises, the inside of the cylinder 20 becomes a negative pressure state, the inlet hole 22a is opened by the cylinder valve 92. The negative pressure state means a pressure state which is lower than atmospheric pressure.
3) When the inlet hole 22a is opened in a state where the inside of the cylinder 20 is in a negative pressure, the liquid contents stored in the container part 10 are introduced into the cylinder 20 through the inlet hole 22a.

As the liquid contents stored in the container part 10 are introduced into the cylinder 20, the container piston 93 is raised.

According to an embodiment of the present invention, the following effects can be obtained.

The rotation force absorption ring 85 is installed between the upper support plate 81 and the lower support plate 82, and also, the forward spiral part 83 having a circular spiral shape is installed between the upper support plate 81 and the rotation force absorption ring 85, the reverse spiral part 84 formed in a circular spiral shape in a direction opposite to the forward spiral part 83 is installed between the rotation force absorption ring 85 and the lower support plate 82, so that the rotation amount of the button 40 can be reduced when the button 40 is pressed.

In addition, the first forward spiral part 83a and the second forward spiral part 83b are fixed to the upper support plate 81 and the rotation force absorption ring 85 so as to be linearly symmetric to each other with reference to the symmetry reference line (see "C" in FIG. 4), and the first reverse spiral part 84a and the second reverse spiral part 84b are fixed to the rotation force absorption ring 85 and the lower support plate 82 so as to be linearly symmetric to each other with reference to the symmetry reference line. Therefore, the elastic force accumulated in the forward spiral part 83 and the reverse spiral part 84 can be increased when the button 40 is pressed, and the state, in which the upper support plate 81, the lower support plate 82, and the rotation force absorption ring 85 are arranged side by side, can be stably maintained.

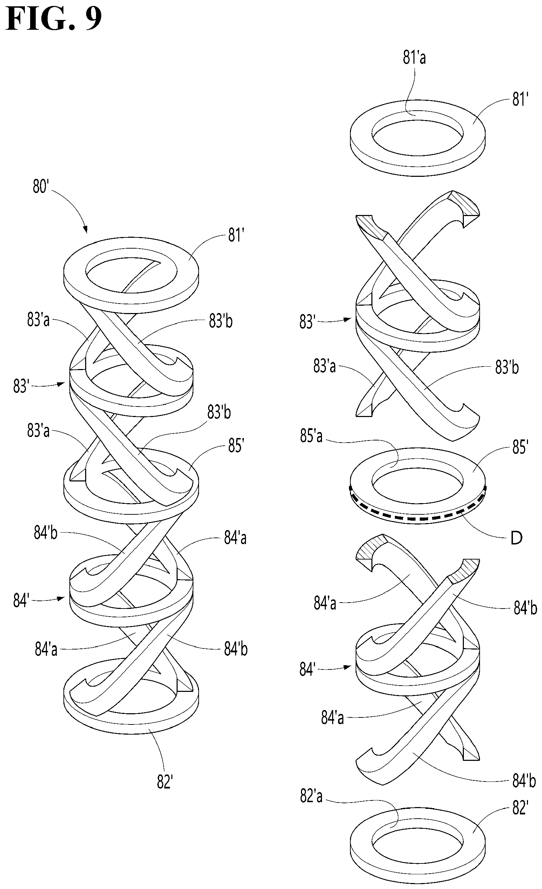

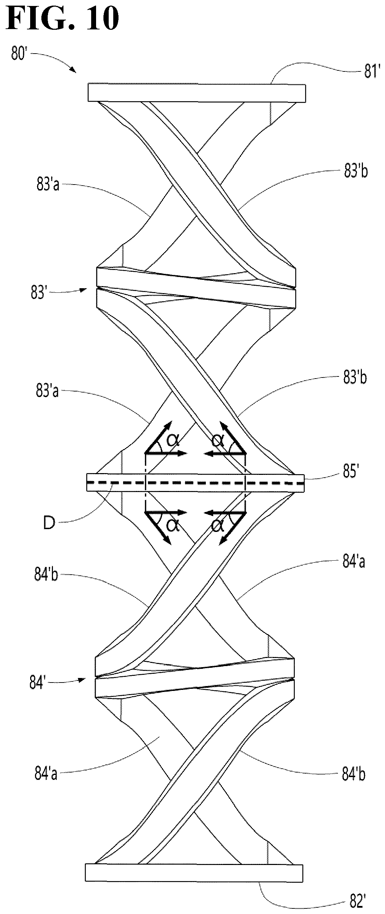

Meanwhile, in the embodiment described above, the first reverse spiral part 84a and the second reverse spiral part 84b are configured to have a spiral trajectory different from the first forward spiral part 83a, but as illustrated in FIG. 9 and FIG. 10, the first reverse spiral part 84'a and the second reverse spiral part 84'b may be configured to have the same spiral trajectory as the first forward spiral part 83'a.

The second forward spiral part 83'b is fixed to the upper support plate 81' so that a point at which the upper end of the second forward spiral part 83'b is fixed to the lower surface of the upper support plate 81' and a point at which the upper end of the first forward spiral part 83'a is fixed to the lower surface of the upper support plate 81' are linearly symmetric to each other with reference to a symmetry reference line (see "C" in FIG. 4).

In addition, the second forward spiral part 83'b is fixed to the rotation force absorption ring 85' so that a point at which the lower end of the second forward spiral part 83'b is fixed to the upper surface of the rotation force absorption ring 85' and a point at which the lower end of the first forward spiral part 83'a is fixed to the upper surface of the rotation force absorption ring 85' are linearly symmetric to each other with reference to the symmetry reference line.

The number of turns between the upper end and the lower end of each of the first forward spiral part 83'a and the second forward spiral part 83'b is 1.5.

The second reverse spiral part 84'b is fixed to the rotation force absorption ring 85' so that a point at which the upper end of the second reverse spiral part 84'b is fixed to the lower surface of the rotation force absorption ring 85' and a point at which the upper end of the first reverse spiral part 84'a is fixed to the lower surface of the rotation force absorption ring 85' are linearly symmetric to each other with reference to the symmetry reference line.

In addition, the second reverse spiral part 84'b is fixed to the lower support plate 82' so that a point at which the lower end of the second reverse spiral part 84'b is fixed to the upper surface of the lower support plate 82' and a point at which the lower end of the first reverse spiral part 84'a is fixed to the upper surface of the lower support plate 82' are linearly symmetric to each other with reference to the symmetry reference line.

The first reverse spiral part 84'a is fixed to the rotation force absorption ring 85' so that a point at which the upper end of the first reverse spiral part 84'a is fixed to the lower surface of the rotation force absorption ring 85' and a point at which the lower end of the first forward spiral part 83'a is fixed to the upper surface of the rotation force absorption ring 85' are plane-symmetric to each other with reference to a symmetry reference surface (see "D" in FIG. 9 and FIG. 10) . The symmetry reference surface means a plane which divides the rotation force absorption ring 85' into two parts having the same vertical thickness.

The second reverse spiral part 84'b is fixed to the rotation force absorption ring 85' so that a point at which the upper end of the second reverse spiral part 84'b is fixed to the lower surface of the rotation force absorption ring 85' and a point at which the lower end of the second forward spiral part 83'b is fixed to the upper surface of the rotation force absorption ring 85' are plane-symmetric to each other with reference to the symmetry reference surface.

The number of turns between the upper end and the lower end of each of the first reverse spiral part 84'a and the second reverse spiral part 84'b is 1.5.

Each of the second forward spiral part 83'b, the first reverse spiral part 84'a, and the second reverse spiral part 84'b has the same spiral trajectory as the first forward spiral part 83'a.

That is, the number of turns of each of the second forward spiral part 83'b, the first reverse spiral part 84'a, and the second reverse spiral part 84'b is identical to the number of turns of the first forward spiral part 83'a, and the lead angles(see "α " in FIG. 10) at corresponding points of the spiral trajectories thereof are identical.

According to another embodiment of the present invention, the following effects can be obtained.

Each of the second forward spiral part 83'b, the first reverse spiral part 84'a, and the second reverse spiral part 84'b is formed to have the same spiral trajectory as the first forward spiral part 83'a. Therefore, the difference between the elastic forces accumulated in the forward spiral part 83' and the reverse spiral part 84' is reduced, and thus a pressing operation of the button 40 becomes convenient.

In addition, the first reverse spiral part 84'a is fixed to the rotation force absorption ring 85' so that a point at which the upper end of the first reverse spiral part 84'a is fixed to the lower surface of the rotation force absorption ring 85' and a point at which the lower end of the first forward spiral part 83'a is fixed to the upper surface of the rotation force absorption ring 85' are plane-symmetric to each other with reference to the symmetry reference surface, and the second reverse spiral part 84'b is fixed to the rotation force absorption ring 85' so that a point at which the upper end of the second reverse spiral part 84'b is fixed to the lower surface of the rotation force absorption ring 85' and a point at which the lower end of the second forward spiral part 83'b is fixed to the upper surface of the rotation force absorption ring 85' are plane-symmetric to each other with reference to the symmetry reference surface. Therefore, the difference between the elastic forces accumulated in the forward spiral part 83' and the reverse spiral part 84' is reduced, and thus a pressing operation of the button 40 becomes convenient.

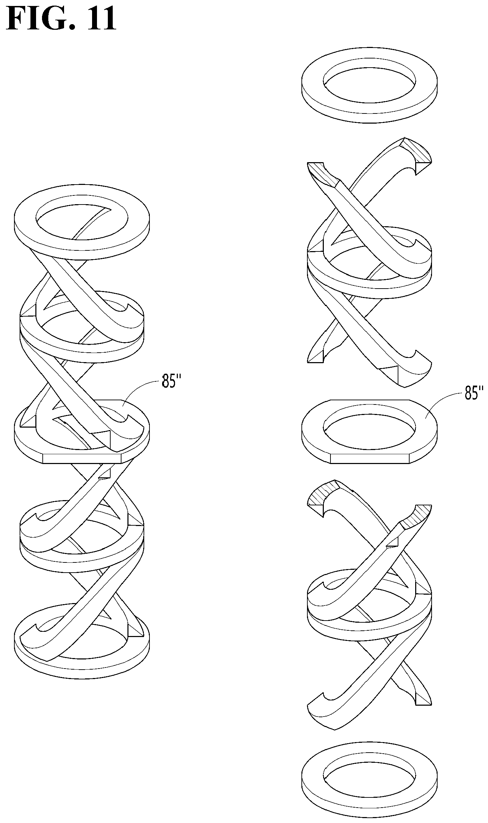

In addition, in the embodiment described above, the rotation force absorption rings 85 and 85' are configured in a circular shape, but the rotation force absorption rings may be configured in other shapes (see reference number 85" in FIG. 11).

In addition, in the embodiment described above, the forward spiral parts 83 and 83' are formed in the left-hand circular spiral shape and the reverse spiral parts 84 and 84' are formed in the right-hand circular spiral shape, but the forward spiral parts are formed in a right-hand circular spiral shape and the reverse spiral parts are formed in a left-hand circular spiral shape.

### List of references in the drawings

10: Container part, 40: Button, 80: Pumping container spring, 81: Upper support plate, 82: Lower support plate, 83: Forward spiral part, 84: Reverse spiral part, 85: Rotation force absorption ring

## Claims

1. A pumping container spring comprising an upper support plate(81) having a circular upper passing-hole(81a) formed therethrough, a lower support plate(82) which has a circular lower passing-hole(82a) formed therethrough and is disposed under the upper support plate(81) so that the lower passing-hole(82a) is aligned with the upper passing-hole(81a) and the lower support plate(82) is parallel to the upper support plate(81), and a spiral part installed between the upper support plate(81) and the lower support plate(82),
wherein the pumping container spring further comprises a rotation force absorption ring(85) which has a circular absorption ring passing-hole(85a) formed therethrough and is installed between the upper support plate(81) and the lower support plate(82) so that the absorption ring passing-hole(85a) is aligned with the upper passing-hole(81a) and the rotation force absorption ring(85) is disposed parallel to the upper support plate(81); and
the spiral part comprises a forward spiral part(83) which is formed in one shape of a left-hand circular spiral shape and a right-hand circular spiral shape and installed between the upper support plate(81) and the rotation force absorption ring(85) so that the upper end of the forward spiral part(83) is fixed to the lower surface of the upper support plate(81) and the lower end of the forward spiral part(83) is fixed to the upper surface of the rotation force absorption ring(85), and a reverse spiral part(84) which is formed in a circular spiral shape in a direction opposite to the forward spiral part(83) and installed between the rotation force absorption ring(85) and the lower support plate(82) so that the upper end of the reverse spiral part(84) is fixed to the lower surface of the rotation force absorption ring(85) and the lower end of the reverse spiral part(84) is fixed to the upper surface of the lower support plate(82).

2. The pumping container spring of claim 1, wherein the forward spiral part(83) comprises a first forward spiral part(83a) having an upper end fixed to the lower surface of the upper support plate (81) and a lower end fixed to the upper surface of the rotation force absorption ring(85), and a second forward spiral part(83b) which is formed in a circular spiral shape in the same direction as the first forward spiral part(83a), the second forward spiral part(83b) being fixed to the upper support plate(81) so that, with reference to the centerline of the upper passing-hole(81a) as a symmetric reference line, a point at which the upper end of the second forward spiral part(83b) is fixed to the lower surface of the upper support plate(81) and a point at which the upper end of the first forward spiral part(83a) is fixed to the lower surface of the upper support plate(81) are linearly symmetric to each other, the second forward spiral part(83b) being fixed to the rotation force absorption ring(85) so that a point at which the lower end of the second forward spiral part(83b) is fixed to the upper surface of the rotation force absorption ring(85) and a point at which the lower end of the first forward spiral part(83a) is fixed to the upper surface of the rotation force absorption ring(85) are linearly symmetric to each other with reference to the symmetry reference line; and
the reverse spiral part(84) comprises a first reverse spiral part (84a) which is formed in a circular spiral shape in a direction opposite to the first forward spiral part(83a) and has an upper end fixed to the lower surface of the rotation force absorption ring(85) and a lower end fixed to the upper surface of the lower support plate(82), and a second reverse spiral part(84b) which is formed in a circular spiral shape in the same direction as the first reverse spiral part (84a), the second reverse spiral part(84b) being fixed to the rotation force absorption ring(85) so that a point at which the upper end of the second reverse spiral part(84b) is fixed to the lower surface of the rotation force absorption ring(85) and a point at which the upper end of the first reverse spiral part(84a) is fixed to the lower surface of the rotation force absorption ring(85) are linearly symmetric to each other with reference to the symmetry reference line, the second reverse spiral part(84b) being fixed to the lower support plate(82) so that a point at which the lower end of the second reverse spiral part(84b) is fixed to the upper surface of the lower support plate(82) and a point at which the lower end of the first reverse spiral part (84a) is fixed to the upper surface of the lower support plate(82) are linearly symmetric to each other with reference to the symmetry reference line.

3. The pumping container spring of claim 2, wherein:
the second forward spiral part(83b) has the same spiral trajectory as the first forward spiral part(83a);
the first reverse spiral part(84a) has the same spiral trajectory as the first forward spiral part(83a); and
the second reverse spiral part(84b) has the same spiral trajectory as the first forward spiral part(83a).

4. The pumping container spring of claim 2, wherein the first reverse spiral part(84a) is fixed to the rotation force absorption ring(85) so that, with reference to the plane dividing the rotation force absorption ring(85) into two parts having the same vertical thickness as a symmetry reference surface, a point at which the upper end of the first reverse spiral part(84a) is fixed to the lower surface of the rotation force absorption ring(85) and a point at which the lower end of the first forward spiral part(83a) is fixed to the upper surface of the rotation force absorption ring(85) are plane-symmetric to each other; and
the second reverse spiral part(84b) is fixed to the rotation force absorption ring(85) so that a point at which the upper end of the second reverse spiral part(84b) is fixed to the lower surface of the rotation force absorption ring(85) and a point at which the lower end of the second forward spiral part (83b) is fixed to the upper surface of the rotation force absorption ring(85) are plane-symmetric to each other with reference to the symmetry reference surface.

5. The pumping container spring of claim 3, wherein the first reverse spiral part(84a) is fixed to the rotation force absorption ring(85) so that, with reference to the plane dividing the rotation force absorption ring(85) into two parts having the same vertical thickness as a symmetry reference surface, a point at which the upper end of the first reverse spiral part(84a) is fixed to the lower surface of the rotation force absorption ring(85) and a point at which the lower end of the first forward spiral part(83a) is fixed to the upper surface of the rotation force absorption ring(85) are plane-symmetric to each other; and
the second reverse spiral part(84b) is fixed to the rotation force absorption ring(85) so that a point at which the upper end of the second reverse spiral part(84b) is fixed to the lower surface of the rotation force absorption ring(85) and a point at which the lower end of the second forward spiral part (83b) is fixed to the upper surface of the rotation force absorption ring(85) are plane-symmetric to each other with reference to the symmetry reference surface.

6. A pumping container comprising a container part(10) in which liquid contents are stored, a button(40) installed above the container part(10), and a pumping container spring(80) installed between the button(40) and the container part(10) to accumulate an elastic force for raising the button(40) to the original position thereof when the button(40) is pressed toward the container part(10),
wherein the pumping container spring(80) comprises the pumping container spring according to any one of claims 1 to 5.
